(19) 

Europäisches
Patentamt
European
Patent Office
Office européen
des brevets

(11) **EP 3 521 394 A1**

(12) **EUROPEAN PATENT APPLICATION**
published in accordance with Art. 153(4) EPC

(43) Date of publication:
07.08.2019 Bulletin 2019/32

(21) Application number: 17856346.6

(22) Date of filing: 28.09.2017

(51) Int Cl.:
*C09J 7/20* (2018.01) *B32B 7/06* (2019.01)
*B32B 7/12* (2006.01) *B32B 27/08* (2006.01)
*B32B 27/18* (2006.01)

(86) International application number:
**PCT/JP2017/035245**

(87) International publication number:
**WO 2018/062397 (05.04.2018 Gazette 2018/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 30.09.2016 JP 2016194010

(71) Applicant: **Unitika, Ltd.**
**Amagasaki-shi, Hyogo 660-0824 (JP)**

(72) Inventors:
• **YAMAMOTO Masafumi**
**Uji-shi**
**Kyoto 611-0021 (JP)**
• **KIHARA Sumito**
**Uji-shi**
**Kyoto 611-0021 (JP)**
• **ANDO Takashi**
**Uji-shi**
**Kyoto 611-0021 (JP)**

(74) Representative: **Vigand, Philippe et al**
**Novagraaf International SA**
**Chemin de l'Echo 3**
**1213 Onex - Genève (CH)**

(54) **POLYESTER FILM**

(57)    This polyester film has at least one surface constituted of a polyester film layer A, and is characterized in that: a polyester resin constituting the polyester film layer A has an inherent viscosity of 0.63 to 0.86 dl/g; the polyester film layer A contains organic particles; and the surface of the polyester film layer A has an arithmetic average roughness (Ra) of a roughness curve of 0.2 to 1.0 μm, and an average length (RSm) of roughness curve elements of 10 to 250 μm.

EP 3 521 394 A1

**Description**

Technical Field

The present invention relates to a polyester film having a matted appearance and containing organic particles.

Background Art

A polyester film has been required to have various performances such as blocking resistance and releasability due to diversification of its application.

For example, in various adhesive sheets constituting a touch panel and an adhesive sheet provided with an adhesive layer such as process material of electronic equipment, a polyester film is used as a protective film for protecting the adhesive layer. The polyester film for this application is required to have blocking resistance when unwound from a rolled film, in addition to releasability when peeled from the adhesive layer. A polyester film used as a release film for mold is required to have heat resistance to withstand a mold temperature, in addition to releasability from a mold and a mold resin.

As a method for improving releasability and blocking resistance in response to such requirements, a method for matting the surface of a polyester film is known.

As a matting treatment method for forming an uneven shape on the surface, a method of incorporating particles in the film is widely known (Patent Literatures 1 to 3) . Patent Literatures 1 and 2 disclose a method of incorporating inorganic particles represented by silica particles in the film. Patent Literature 3 discloses a low gloss polyester film containing organic particles of divinylbenzene-styrene crosslinked particles.

Citation List

Patent Literature

    Patent Literature 1: Japanese Patent Laid-Open No. 2001-322218
    Patent Literature 2: Japanese Patent Laid-Open No. 2006-312263
    Patent Literature 3: Japanese Patent Laid-Open No. 2015-40220

Summary of Invention

Technical Problem

In the film used as the release film for mold, an adhesive layer is laminated on the surface opposite to the surface having releasability. Depending on the type of the adhesive layer, even after the film with the adhesive layer formed is wound into a roll, components of the adhesive layer may remain unreacted. Since the reaction of these unreacted components gradually proceeds afterwards, it has been necessary to form unevenness on the surface opposite to the film surface on which the adhesive layer would be formed so that the generated gas could easily escape from the film roll. However, in the matte polyester films containing inorganic particles for imparting light diffusibility and mere releasability disclosed in Patent Literatures 1 and 2, escape of the gas generated from the adhesive layer (air escape) was insufficient.

Generally, in order to improve the blocking resistance of the film, a film is formulated to increase the surface roughness of the film such as the arithmetic average roughness (Ra) and the ten-point average roughness (Rz). Improving not only blocking resistance but also air escape has been difficult for the rolled polyester film.

In the matte polyester film containing organic particles disclosed in Patent Literature 3, when a releasing layer containing a binder component and a fluorine-type releasing agent was further laminated on the film surface, the film was unsuitable for a protective film for adhesive materials or the like due to a complicated process and possible contamination of an adherend surface after the release with low molecular weight components contained in the releasing layer.

The object of the present invention is to solve such problems and to provide a matte polyester film with improved air escape when the film is wound in a roll form and improved blocking resistance when the film is unwound.

Solution to Problem

The present inventors have conducted intensive investigations to solve the problems and found that the problems can be solved by a polyester film having a polyester film layer constituted of a polyester resin having a specific inherent viscosity; containing organic particles; and having a specific surface roughness, and have reached the present invention.
The gist of the present invention is as follows:

(1) A polyester film including:

a polyester film layer A constituting at least one surface of the polyester film,
wherein a polyester resin constituting the polyester film layer A has an inherent viscosity of 0.63 to 0.86 dl/g; the polyester film layer A contains organic particles; and the surface of the polyester film layer A has an arithmetic average roughness (Ra) of a roughness curve of 0.2 to 1.0 $\mu$m and an average length (RSm) of roughness curve elements of 10 to 250 $\mu$m.

(2) The polyester film according to (1), wherein the organic particles have an average particle diameter of 0.5 to 1.5 $\mu$m.
(3) The polyester film according to (1) or (2), wherein the ratio (D/T) of the average particle diameter (D) of the organic particles and the thickness (T) of the polyester film layer A is 0.3 to 1.5.
(4) The polyester film according to any one of (1) to (3), wherein the content of the organic particles in the polyester film layer A is 0.1 to 20 mass%.
(5) The polyester film according to any one of (1) to (4), wherein the polyester film contains a layer other than the polyester film layer A and the layer other than the polyester film layer A contains a pigment.
(6) The polyester film according to any one of (1) to (5), wherein a gloss retention rate (G/G0 $\times$ 100) obtained from the gloss (G) of the mold surface after repeating the operation of loading the polyester film in contact with the heated mold cavity; evacuating the inside of the cavity; and releasing the vacuum after a certain period of time and an initial gloss (G0) is 70% or more.
(7) The polyester film according to any one of (1) to (6), wherein one surface is constituted of the polyester film layer A and an adhesive layer is laminated onto the other surface.
(8) A protective film for an adhesive sheet, using the polyester film according to any one of (1) to (7).
(9) A release film for mold, using the polyester film according to any one of (1) to (7).

Advantageous Effects of Invention

The present invention can provide a matte polyester film having excellent releasability to an adherend such as an adhesive sheet; having improved air escape when the film is wound in a roll form; and having improved blocking resistance when the rolled film is unwound, and can provide the polyester film suitable for a protective film for an adhesive sheet, a release film for mold, and a carrier film.

Description of Embodiments

The polyester film of the present invention has at least one surface of the polyester film that is constituted of the polyester film layer A, and the polyester film layer A contains organic particles.
The polyester film may be entirely constituted of the polyester film layer A, but a layer other than the polyester film layer A may be laminated from the viewpoint of preventing breakage in the film stretching step and improving film strength. When the layer other than the layer A includes layers B, C, and D, specific examples of the layer structure include A/B (2 layers with 2 kinds), A/C/B (3 layers with 3 kinds), A/C/D/B (4 layers with 4 kinds), and A/C/D/C/B (5 layers with 4 kinds). It is also possible to form the layer A on both the surfaces of the film, such as A/B/A (3 layers with 2 kinds) and A/B/C/A (4 layers with 3 kinds), to provide both the surfaces of the film with matteability.
The polyester resin constituting the polyester film of the present invention is not particularly limited, and examples thereof include polyethylene terephthalate, polybutylene terephthalate, and polytrimethylene terephthalate. Among these resins, polyethylene terephthalate is excellent in balance between heat resistance and mechanical properties, is also excellent in stretchability, and therefore can be suitably used.
Polyethylene terephthalate is usually obtained by using an ester exchange method with dimethyl terephthalate and ethylene glycol or a direct esterification method with terephthalic acid and ethylene glycol to obtain an oligomer, followed by melt polycondensation or further solid phase polymerization.
The melt polycondensation is carried out in the presence of a polycondensation catalyst composed of a compound containing a specific amount of metal atoms, and examples of the metal atoms include antimony, germanium, and titanium. Specific examples of the compound containing the metal atoms include antimony trioxide, antimony acetate, germanium dioxide, tri-n-butyl titanate, tetra-n-butyl titanate, tetraisobutyl titanate, tetraethyl titanate, and triisobutyl titanate.

In producing polyester through the melt polycondensation step and the solid phase polymerization step, it is also possible to deactivate the polycondensation catalyst contained in the polyester by carrying out hot water or steam treatment after the solid phase polymerization step.

When the polyester film of the present invention is used for applications such as a protective film for an adhesive sheet, a release film for mold, and a carrier film, it is preferable not to contaminate parts with which the film is in contact in various steps, for example, apparatuses such as a conveyor belt and a mold, by a low molecular weight substance that is precipitated from the polyester film. Even though the contact time of the polyester film is short and the degree of contamination is minor, the repeated contact may contaminate the apparatuses, and the contamination of the apparatuses may impair the functionality of the polyester film. Therefore, the precipitation of the low molecular weight substance in the polyester film of the present invention is preferably suppressed as much as possible.

In order to suppress the precipitation of the low molecular weight substance from the film, it is effective to use polyester in which a polycondensation catalyst contained in the polyester is inactivated by the hot water or steam treatment after the melt polycondensation step and the solid phase polymerization step, as polyester constituting the film.

The amount of the low molecular weight substance precipitated from the polyester film of the present invention can be evaluated by a simulated test. For example, when the polyester film is used as a release film for mold, the polyester film is loaded in a mold cavity so as to be in contact with the heated mold. The inside of the cavity is evacuated and the vacuum is released after a certain period of time. The gloss retention rate (G/G0 × 100) is calculated from the gloss (G) of the mold surface after the load of the film and the evacuation were repeated and the initial gloss (G0) of the mold surface, allowing for evaluation. The gloss retention rate (G/G0 × 100) is preferably 70% or more, more preferably 75% or more, further preferably 80% or more. The shape and size of the mold cavity to be used, heating temperature, time, vacuuming condition, number of repetitions can be optionally determined according to applications of the polyester film of the present invention.

As a more detailed example of the simulated test, a mold having a cavity inner dimension of 220 mm × 55 mm × 1.5 mm is heated to 175°C and the polyester film is loaded so that the surface of the polyester film layer A is in contact with the mold, evacuated, and held for 2 minutes. Thereafter, evacuation is released to set to normal pressure, and the polyester film is removed. A new polyester film is loaded and the same operation is repeated 1000 times. After all operations are completed, the gloss (G) of the mold surface is measured. In the present invention, the simulated test according to this detailed example was conducted for evaluation.

The polyester resin is preferably a single component polymer from the viewpoint of controlling the surface roughness such as Ra described below, but other components may be copolymerized. Examples of other copolymerizable components as a dicarboxylic acid component include isophthalic acid, phthalic acid, 2,6-naphthalenedicarboxylic acid, sodium 5-sulfoisophthalate, oxalic acid, succinic acid, adipic acid, sebacic acid, azelaic acid, dodecanoic acid, dimer acid, maleic anhydride, maleic acid, fumaric acid, itaconic acid, citraconic acid, and mesaconic acid.

Examples of other copolymerizable components as a glycol component include diethylene glycol, propylene glycol, 1,3-propanediol, 1,4-butanediol, neopentyl glycol, 1,6-hexanediol, cyclohexane dimethanol, triethylene glycol, polyethylene glycol, polypropylene glycol, polytetramethylene glycol, and ethylene oxide adducts of bisphenol A or bisphenol S.

The polyester resin needs to have an inherent viscosity of 0.63 to 0.86 dl/g, preferably 0.65 to 0.84 dl/g, and more preferably 0.67 to 0.82 dl/g. When the inherent viscosity of the polyester resin is less than 0.63 dl/g, the mechanical strength of the polyester film layer A may decrease, the organic particles contained in the polyester film layer A are peeled off from the polyester resin in the film stretch, voids (bubbles) may tend to be formed in the polyester film layer A, the organic particles fall off from the polyester film layer A, and mold contamination is highly concerned. Void means that the interface with the contained organic particles is peeled off as the matrix polyester resin is stretched, and an empty space is formed therebetween. The empty space in void generally has a shape elongated in a spindle shape in a stretching direction or a direction with a high stretching magnification. As described below, the empty space fraction is preferably less than 80%. The empty space fraction exceeds 80%, increasing the concern of dropping of the organic particles.

On the other hand, when the inherent viscosity of the polyester resin exceeds 0.86 dl/g, not only the load in the melt extrusion process during film formation is large and the productivity tends to decrease, but also the polyester film layer A may be difficult to have a predetermined RSm.

In the present invention, the polyester film layer A needs to contain organic particles. The organic particles have an advantage that the range of the selectable average particle diameter is wider than that of the inorganic particles and the selection of particles with high sphericity is easy.

Specific examples of the organic particles include crosslinked acrylic particles, crosslinked polystyrene particles, crosslinked melamine particles, organosilicone particles, and crosslinked styrene-acrylic particles, and crosslinked acrylic particles are particularly preferred in terms of sphericity. As organic particles, a single component may be used or two or more components may be used simultaneously. Organic particles with different particle diameters can also be used in combination. Core/shell type organic particles can be used to enhance the adhesion to the polyester resin constituting the polyester film layer A and to provide other functions.

The shape and the sphericity of the organic particles used in the present invention are preferably unchanged even after extruding the resin in the film formation and also in the film after uniaxial or biaxial stretching. The organic particles preferably have flexibility to deform when filtered with an extruder. In the present invention, inorganic particles are not used as the particles contained in the polyester film layer A, but organic particles, having more flexibility than inorganic particles, are used. Accordingly, in the film formation of the polyester film layer A, filter pressurization does not tend to occur and operability is not impaired, and predetermined Ra and RSm in the polyester film layer A can be obtained.

The sphericity (major axis/minor axis) of the organic particles is preferably 1.0 to 1.2, more preferably 1.0 to 1.1. When the sphericity of the organic particles exceeds 1.2, the air escape is reduced in the polyester film layer A. As the sphericity of the organic particles in the polyester film layer A approaches 1.0, the polyester film hardly causes winding misalignment as air is not entrained when wound into a roll. In addition, the blocking resistance at the time of unwinding is improved. As the sphericity of the organic particles approaches 1.0, filter pressurization does not tend to occur when the molten resin is filtered with an extruder. In the case of organic particles whose sphericity is not 1.0, the filter pressurization significantly tends to occur; the operability is reduced; various properties of the obtained film are impaired; and the obtained film is difficult to have a predetermined surface roughness.

The average particle diameter of the organic particles varies depending on the applications of the polyester film and is not particularly limited, but preferably 0.5 to 15 $\mu$m, more preferably 1 to 10 $\mu$m, furthermore preferably 2 to 8 $\mu$m. When the average particle diameter of the organic particles is less than 0.5 $\mu$m, the polyester film layer A has insufficient releasability. Organic particles having an average particle diameter of more than 15 $\mu$m tend to drop off from the polyester film layer A, resulting in mold contamination.

The content of the organic particles is not particularly limited, but is specifically and preferably 0.1 to 20 mass%, more preferably 1 to 15 mass%, furthermore preferably 2 to 8 mass%. When the content of the organic particles is less than 0.1 mass%, the polyester film has too few projections on its surface, not exhibiting releasability. When the content of the organic particles is more than 20 mass%, it is difficult to hold the organic particles in the film, the organic particles tend to fall off easily, and breakage of the film tends to occur.

In the present invention, the polyester film layer A has the arithmetic average height of the roughness curve (the center line average roughness of the surface, Ra) of 0.2 to 1.0 $\mu$m, and the average length of the roughness curve element (average spacing of unevenness, RSm) is required to be 10 to 250 $\mu$m. In addition to having Ra and RSm in the range, the polyester film layer A has excellent releasability from an adherend by using the organic particles.

When Ra exceeds 1.0 $\mu$m, the blocking resistance of the polyester film layer A reduces. When Ra is less than 0.2 $\mu$m, the releasability becomes insufficient. When RSm exceeds 250 $\mu$m, the polyester film layer A becomes insufficient in releasability and the polyester film is blocked when laminated. When RSm is less than 10 $\mu$m, the projections become too dense and the releasability is impaired. Ra of the polyester film of the present invention is preferably 0.3 to 0.6 $\mu$m, and more preferably 0.45 to 0.55 $\mu$m. RSm is preferably 30 to 200 $\mu$m, and more preferably 50 to 150 $\mu$m.

Ra and RSm of the polyester film layer A can be adjusted by selecting the average particle diameter and content of the organic particles. For example, when the average particle diameter of the organic particles is increased, Ra and RSm tend to increase, and when the content of the organic particles increases, Ra tends to increase and RSm tends to decrease. These Ra and RSm are appropriately selected so as to obtain targeted releasability and blocking resistance.

The polyester film layer A preferably has a gloss (60 degrees) of 60% or less, more preferably 40% or less, and furthermore preferably 30% or less.

The polyester film constituted of the polyester film layer A having a gloss (60 degrees) of more than 60% has insufficient unevenness on the surface, and thus is inferior in releasability and tends cause blocking when laminated.

On the other hand, the lower limit of the gloss (60 degrees) of the polyester film layer A is not particularly provided, and when the gloss (60 degrees) is less than 20%, the surface of the polyester film layer A is too rough and the strength of the film surface tends to be lowered.

The thickness of the polyester film layer A is not particularly limited and can be appropriately set according to the total thickness of the polyester film to be obtained and the average particle diameter and content of the organic particles contained in the polyester film layer A. The total thickness of the obtained polyester film is preferably 5 to 500 $\mu$m, more preferably 10 to 400 $\mu$m, and furthermore preferably 15 to 200 $\mu$m. In this case, the thickness of the polyester film layer A is preferably 1 to 100 $\mu$m, more preferably 2 to 80 $\mu$m, and furthermore preferably 3 to 40 $\mu$m. In the case of forming the polyester film layer A on both the surfaces of the polyester film, it is preferable to adjust each polyester film layer A within the range of the layer thickness.

The ratio (D/T) of the average particle diameter (D) of the organic particles and the thickness (T) of the polyester film layer A is preferably 0.3 to 1.5, and more preferably 0.4 to 1.5. When D/T is 0.3 or more, it is easy to hold the organic particles in the polyester film layer A and falling off of the organic particles hardly occurs. In order to obtain the surface roughness defined in the present invention, D/T is preferably 1.5 or less.

The polyester film of the present invention may be entirely constituted of the only polyester film layer A, but a layer other than the polyester film layer A may be laminated from the viewpoint of preventing breakage in the film stretching step and film strength.

A resin constituting the layer other than the polyester film layer A is usual polyester, and a polyester film layer (hereinafter, sometimes referred to as a polyester film layer B) constituted of this polyester may contain inorganic or organic particles for blocking prevention. In applications requiring visibility, titanium oxide is preferably contained as the inorganic particles. Using titanium oxide can secure light permeability while colored in white. When titanium oxide is contained in the polyester film layer B, the average particle diameter of the titanium oxide is preferably 0.05 to 0.5 μm, and more preferably 0.1 to 0.4 μm. The content of titanium oxide is preferably 1 to 5 mass%, and more preferably 2 to 4 mass%.

An example of a method for producing the polyester film of the present invention will be described.

From the viewpoint of easy adjustment of the surface roughness, the polyester film of the present invention is preferably stretched in at least one direction. Only after a polyester film layer A containing organic particles is stretched, the particles are raised on the surface and the polyester film layer A becomes a film having a matted appearance. Therefore, the suitable surface roughness can be adjusted depending on the stretching magnification.

In the case that the polyester film of the present invention is a laminated film in which the polyester film layer A and other layers are laminated, the polyester film is preferably produced by extrusion using the coextrusion method in which all layers are co-melt extruded from a die, a stretch in biaxial direction, and heat setting.

Specifically, each of the resin constituting the polyester film layer A and the resin constituting the layer other than the layer A is supplied to separate melt extruders, melted at a temperature of the melting point of each resin to (melting point + 40°C), and extruded in a sheet form through a feed-block type or multi-manifold type of T die via a filter.

The extruded laminated sheet is in close contact with a cooling drum having a temperature adjusted to 30°C or less by a known method such as an electrostatic casting method or an air knife method, and is quenched and solidified so as to have a temperature equal to or lower than the glass transition temperature to obtain an unstretched sheet having a desired thickness.

Uniaxially stretching or biaxially stretching the obtained unstretched sheet can provide a polyester film having a matte appearance and having the surface roughness defined in the present invention.

In the uniaxial stretching method, the unstretched film is stretched in the transverse direction or the longitudinal direction at a stretching magnification of about 2 to 6 times, respectively.

Examples of the biaxial stretching method include a simultaneous biaxial stretching method in which a film is simultaneously stretched in the longitudinal direction and the transverse direction by a tenter-type simultaneous biaxial stretching machine and a sequential biaxial stretching method in which a film is stretched in the longitudinal direction by a roll-type stretching machine and then stretched in the transverse direction by a tenter-type transverse stretching machine. The stretching magnification is preferably 3 times or more, more preferably 4 to 20 times, furthermore preferably 6 to 15 times as large as the area of the polyester film. When the stretching magnification exceeds 20 times, voids are generated around the particles in the polyester film, and the frequency of breakage of the film may be high.

The stretching temperature is preferably in the range of (glass transition temperature + 5°C) to (glass transition temperature + 60°C) of the polyester resin and more preferably in the range of (glass transition temperature + 15°C) to (glass transition temperature + 55°C). When the stretching temperature is less than (glass transition temperature + 5°C), voids are generated in the stretched film and the frequency of breakage of the film tends to be high.

The film after stretching is heat-treated for several seconds at a temperature of 150°C to (polyester melting point - 5°C) in a tenter at a relaxation rate of 0 to 10% in the longitudinal direction and the transverse direction, and then cooled to a room temperature and wound at a speed of 20 to 200. m/min.

The heat treatment after the described stretching is a step necessary for reducing the thermal shrinkage of the polyester film. Examples of the heat treatment method include a method of blowing hot air, a method of irradiating infrared rays, and a method of irradiating microwave. Among these methods, the method of blowing hot air is preferable since uniform and accurate heating is possible.

The polyester film of the present invention may have the polyester film layer A on one surface and an adhesive layer laminated on the other surface. The polyester film laminated with the adhesive layer can be suitably used as a release film such as for a resin molding step having a heat treatment step and can be particularly and preferably used as a carrier film such as for a semiconductor chip.

Examples of the resin constituting the adhesive layer include an acrylic resin or a silicone resin. The acrylic resin is preferably a polymer of acrylic acid ester or methacrylic acid ester having heat resistance or a copolymer thereof, and examples thereof include a polymer of butyl acrylate, ethyl acrylate, methacrylic acid, acrylonitrile, hydroxyethyl acrylate or copolymers of two or more of these monomers. As the silicone resin, either an addition-type or a condensation-type can be used. Specific examples thereof include the silicone resin which cures dimethylpolysiloxane and methylhydrogenpolysiloxane using a catalyst such as organotin.

Examples

1. Measurement method

(1) Inherent viscosity of polyester resin

Using an equal mass mixture of phenol and tetrachloroethane as a solvent, the inherent viscosity of the polyester resin was measured under the condition of a sample concentration of 0.5 mass% and a temperature of 20°C according to a conventional method.

(2) Sphericity of particle

Using the transmission electron microscope, the center of gravity of organic particles was determined from projections photographed with a magnification of 1000 times. The ratio (DS/DL) of the minimum diameter (DS) passing through the center of gravity and the maximum diameter (DL) passing through the center of gravity of any 50 particles was measured, and the average value thereof was taken as the sphericity.

(3) Average particle diameter

The average particle diameter of the particles used in Examples was measured using a particle size distribution measuring apparatus (Nanotrac Wave-UZ 152 type, manufactured by Nikkiso Co., Ltd.).

(4) Gloss

According to the method prescribed in JIS-Z-8741, 60° specular gloss was measured for the surface of the polyester film layer A of the polyester film using a glossmeter (VG 7000, manufactured by Nippon Denshoku Industries Co., Ltd).

(5) Total light transmittance and haze

Total light transmittance and haze of the polyester film were measured using a spherical turbidimeter NDH-300A, manufactured by Nippon Denshoku Industries Co., Ltd.

(6) Surface roughness

The surface roughness of the surface of the polyester film layer A of the polyester film (the arithmetic average height (Ra) of the roughness curve, the maximum height (Rz) of the roughness curve, and the average length (RSm) of the roughness curve element) was measured using a surface roughness measuring machine (SJ-400, manufactured by Mitutoyo Corporation).

(7) Releasability

An adhesive tape (LP-24, manufactured by Nichiban Co., Ltd.) was stuck on the surface of the polyester film layer A, left at 70°C for 20 hours under a load of 20 g/cm$^2$, and conditioned at 23°C and 50%RH atmosphere. With respect to the humidity conditioned sample, the adhesive tape was peeled off from the surface of the polyester film layer A by hand, and the releasability was evaluated according to the following criteria. Good or fair is releasability without practical problem.
Good: Easy peeling
Fair: No peeling resistance with a slight peeling sound
Poor: Considerable peeling resistance

(8) Blocking resistance and air escape

[Preparation of adhesive]

The carboxyl group of the copolymer composed of 80 parts by mass of butyl acrylate and 20 parts by mass (21.6% by mole) of acrylic acid was reacted with 0.3 equivalent of methacryloyloxyethyl isocyanate to obtain a copolymer having a weight average molecular weight of 600,000. 100 parts by mass of a 30 mass% toluene solution of the copolymer and 1 part by mass of a 37.5 mass% toluene solution of a multivalent isocyanate compound (Olivine BHS 8515, manufactured by Toyo Ink Mfg. Co., Ltd.) were mixed to obtain an adhesive solution.

[Preparation of adhesive coated film]

A toluene solution of the adhesive prepared by the described method was applied to one surface of a polyester film (the surface B in the case that the polyester film has a laminated structure of A/B) having a width of 400 mm by a comma coater (manufactured by Hirano Tecseed Co., Ltd., coating speed of 1 m/min, and drying temperature of 110°C) so as to make a thickness of a dried film 15 $\mu$m, and dried to obtain an adhesive layer laminated polyester film. The obtained adhesive layer laminated polyester film was wound into a roll and cured by standing at 40°C for 3 days.

[Evaluation of air escape]

The roll of the adhesive layer laminated film after curing by standing was visually confirmed whether air entrained at the time of winding or gas generated from the adhesive during curing was sufficiently released. Visual confirmation was carried out with the adhesive layer laminated film unwound from the film roll, and air escape was evaluated by the presence or absence of embracing of air bubbles in the adhesive layer, which is an adhesive film.

[Evaluation of blocking resistance]

In the evaluation of the air escape, the peeling condition between the surface of the polyester film layer A and the surface of the adhesive layer at the time of unwinding the adhesive layer laminated polyester film was evaluated according to the following criteria. The film with an evaluation of Good or Fair has no practical problem and has blocking resistance.
Good: Easy peeling
Fair: No peeling resistance with a slight peeling sound
Poor: Considerable peeling resistance

(9) Void (bubble)

Voids on the surface of the film were observed with a digital microscope (OLS4100 model, manufactured by Olympus Corporation) at a magnification of 2000 times. 100 points were optionally observed, and the empty space fraction (Q) in void was calculated from the area occupied by the particles (X) and the area occupied by the empty space (Y) and evaluated according to the following criteria. The empty space fraction (Q) is an average value of N = 100, and is preferably less than 80%.

$$\text{Empty space fraction in void (Q)} = \{Y/(X + Y)\} \times 100 \ (\%)$$

Good: Q < 50
Fair: $50 \leq Q < 80$
Poor: $80 \leq Q$

(10) Pressurization

A resin composition A for forming the polyester film layer A was extruded at 1 kg/hr using a filter having a collection efficiency of 70 to 80% of 25 $\mu$m in a filter pressurization tester (19C0, manufactured by Imoto Machinery Co., Ltd.) to measure the resin pressure before the filter. The presence or absence of clogging was evaluated by pressurization.
Good: 0.5 MPa or less of the rise of the resin pressure after 5 hours
Poor: More than 0.5 MPa of the rise of the resin pressure after 5 hours

(11) Mold contamination

A mold having a cavity inner dimension of 220 mm $\times$ 55 mm $\times$ 1.5 mm was heated to 175°C and the polyester film was loaded so that the surface of the polyester film layer A was in contact with the mold, evacuated, and held for 2 minutes. Thereafter, evacuation was released to set to normal pressure, and the polyester film was removed. A new polyester film was loaded and the same operation was repeated 1000 times. After all the operations were finished, the gloss (G) of the mold surface was measured at an incident angle of 60° using a glossmeter (VG 7000 type, manufactured by Nippon Denshoku Industries Co., Ltd.) to determine the gloss retention rate from the following formula. The gloss retention rate is preferably 70% or more. The initial gloss (G0) of the mold surface was 70%.

$$\text{Gloss retention rate (\%) = (G/G0)} \times 100$$

(12) Releasability in molding (1)

A mold having a cavity inner dimension of 220 mm $\times$ 55 mm $\times$ 1.5 mm was heated to 175°C and the polyester film was loaded so that the surface of the polyester film layer A was in contact with the mold, evacuated, and held for 2 minutes. Thereafter, evacuation was released to set to normal pressure, and the polyester film was removed. The releasability of the polyester film at this point was evaluated according to the following criteria.
Good: Good releasability
Poor: Poor releasability

(13) Releasability in molding (2)

The two-kind three-layer film having a layer structure of layer A/layer B/layer A and the polyester film composed only of layer A were further evaluated for releasability in molding by the following method.
100 parts by mass of an acrylic resin (WS-023, manufactured by Teikoku Kagaku Sangyo K.K.) and 5 parts by mass of a crosslinking agent (Coronate L, manufactured by Nippon Polyurethane Industry Co., Ltd.) were dissolved in toluene to obtain a resin solution (solid content of 15 mass%). This solution was applied to one surface of the polyester film so as to form a release layer having a dry thickness of 1 $\mu$m to prepare a release sheet. This sheet was mounted so that the layer A was in contact with the upper surface of the inside of a transfer mold, fixed in vacuum, and clamped, and a semiconductor chip was subjected to transfer molding with a sealing epoxy resin (CEL 9200, manufactured by Hitachi Chemical Company Ltd.) under the conditions of a mold temperature of 175°C, a pressure of 10 MPa, and a time of 90 seconds to obtain a semiconductor package.
The releasability of the polyester film in molding was evaluated according to the following criteria.
Good: Good releasability from mold and semiconductor package
Fair: Poor releasability from either one of mold or semiconductor package
Poor: Poor releasability from both mold and semiconductor package

2. Raw material

(Production of polyethylene terephthalate resin (J-1))

100 parts by mass of terephthalic acid and 52 parts by mass of ethylene glycol were charged in an esterification reaction tank and esterification reaction was carried out at 260°C under a pressure of 0.3 MPaG. Subsequently, the obtained polyester low polymer was fed to a polycondensation reaction tank, and polycondensation reaction was carried out at 280°C for 120 minutes using germanium dioxide as a polymerization catalyst to obtain a polyethylene terephthalate resin (J-1) having an inherent viscosity of 0.65 dl/g.

(Production of polyethylene terephthalate resins (J-2) to (J-5))

Polyethylene terephthalate resins (J-2) to (J-5) having respective inherent viscosities were obtained in the same manner except that the reaction time of the polycondensation in the polyethylene terephthalate resin (J-1) was changed.

(Production of polyethylene terephthalate resins (J-6) to (J-7))

The polyethylene terephthalate resin (J-1) was further fed to a crystallization apparatus and crystallized at 150°C. Subsequently, this crystallized resin was fed to a dryer and dried at 160°C for 8 hours, then sent to a preheater, heated to 190°C, and then fed to a solid phase polymerization machine. Under nitrogen gas, solid phase polymerization reaction was carried out at 190°C for 10 to 50 hours so as to obtain the inherent viscosity shown in Table 1 to obtain polyethylene terephthalate resins (J-6) to (J-7).

(Production of polyethylene terephthalate resin (J-8))

The polyethylene terephthalate resin (J-6) was further subjected to a catalyst deactivation treatment by a hot water treatment (90°C, 4 hours) to obtain a polyethylene terephthalate resin (J-8). The solid phase polymerization reaction time before the hot water treatment was adjusted so that the inherent viscosity shown in Table 1 was obtained.

(Production of master batch (M-1))

100 parts by mass of the polyethylene terephthalate resin (J-3) were subjected to melt kneading to obtain 1.5% parts by mass of silica particles (S-1) (Sylysia 310P, manufactured by Fuji Silysia Chemical Ltd., average particle diameter of 2.3 μm) and to prepare a silica 1.5% master (M-1).

(Production of master batch (M-2))

100 parts by mass of the polyethylene terephthalate resin (J-8) were subjected to melt kneading to obtain 2.5 parts by mass of titanium oxide (S-2) (Ti-Pure R 350, manufactured by Du Pont, average particle diameter of 0.3 μm) and to prepare titanium oxide 2.5% master (M-2).

The production conditions and inherent viscosities of polyethylene terephthalate resins (J-1) to (J-8) are shown in Table 1.

[Table 1]

| | Polyethylene terephthalate resin | | |
|---|---|---|---|
| | Production condition | | Property |
| | Solid phase polymerization | Catalyst inactivation treatment | Inherent viscosity (dl/g) |
| J-1 | No | No | 0.65 |
| J-2 | No | No | 0.74 |
| J-3 | No | No | 0.69 |
| J-4 | No | No | 0.60 |
| J-5 | No | No | 0.90 |
| J-6 | Yes | No | 0.67 |
| J-7 | Yes | No | 0.79 |
| J-8 | Yes | Yes | 0.79 |

As the organic and inorganic particles, the following particles shown in Table 2 were used.

[Table 2]

| | Organic particle and inorganic particle | | |
|---|---|---|---|
| | Composition | Average particle diameter (μm) | Sphericity |
| P-1 | Crosslinked acryl | 5.0 | 1.0 |
| P-2 | Crosslinked acryl | 0.45 | 1.0 |
| P-3 | Crosslinked acryl | 1.0 | 1.0 |
| P-4 | Crosslinked acryl | 3.0 | 1.0 |
| P-5 | Crosslinked acryl | 5.0 | 1.0 |
| P-6 | Crosslinked acryl | 10.0 | 1.0 |
| P-7 | Crosslinked acryl | 20.0 | 1.0 |
| P-8 | Crosslinked styrene | 5.0 | 1.0 |

(continued)

| | Organic particle and inorganic particle | | |
| | Composition | Average particle diameter (μm) | Sphericity |
| --- | --- | --- | --- |
| P-9 | Benzoguanamine-melamine-formaldehyde condensate | 3.0 | 1.0 |
| P-10 | Silica | 4.0 | 1.1 |
| P-11 | Zeolite | 5.3 | 1.0 |

P-1: Uni Powder NMB-0520C manufactured by JX Nippon Oil & Energy Corporation, crosslinked acrylic particles, average particle diameter of 5 μm

P-2: MX 300 W manufactured by Nippon Shokubai Co., Ltd., crosslinked acrylic particles, average particle diameter of 0.45 μm

P-3: SX-130H manufactured by Soken Chemical & Engineering Co., Ltd., crosslinked acrylic particles, average particle diameter of 1 μm

P-4: KMR-3TA manufactured by Soken Chemical & Engineering Co., Ltd., crosslinked acrylic particles, average particle diameter of 3 μm

P-5: Uni Powder NMB-0520 manufactured by JX Nippon Oil & Energy Corporation, crosslinked acrylic particles, average particle diameter of 5 μm

P-6: Uni Powder NMB-1020C manufactured by JX Nippon Oil & Energy Corporation, crosslinked acrylic particles, average particle diameter of 10 μm

P-7: MX 2000 manufactured by Soken Chemical & Engineering Co., Ltd., crosslinked acrylic particles, average particle diameter of 20 μm

P-8: SX-500H manufactured by Soken Chemical & Engineering Co., Ltd., crosslinked styrene particles, average particle diameter of 5 μm

P-9: M30 manufactured by Nippon Shokubai Co., Ltd., Benzoguanamine-melamine-formaldehyde condensate particles, average particle diameter of 3 μm

P-10: Silica, Sylysia 430 manufactured by Fuji Silysia Chemical Ltd., average particle diameter of 4 μm

P-11: Zeolite, Mizukasieves manufactured by Mizusawa Chemicals Industry Co., average particle diameter of 5.3 μm

Example 1

The polyethylene terephthalate resin (J-1) pellet and the organic particles (P-1) were melt blended in a twinscrew kneader to make the content of the organic particles (P-1) 5.0 mass%, fed out and pelletized by a conventional method, and dried by a conventional method to prepare a resin composition A for forming the polyester film layer A.

The polyethylene terephthalate resin (J-3) pellet and the silica 1.5% master (M-1) were blended to make the content of the silica particles (S-1) 0.05 mass%, dried by a conventional method, and melted in a sub-extruder to prepare a resin composition B for forming a polyester film layer B.

A melt of the resin composition A for forming the polyester film layer A and a melt of the resin composition B for forming the polyester film layer B were merged at the feed block and extruded from the T die to obtain the thickness ratio of the layer A and the layer B of 10/28. The melt mixture was close contact with a cooling drum having a surface temperature adjusted to 20°C by an electrostatic application method and quenched to obtain an unstretched film having a thickness of 650 μm.

The unstretched film was preheated with preheating roll groups having a temperature adjusted to 90°C. The peripheral speed was changed between stretching rolls having a temperature adjusted to 90°C, and the film was longitudinally stretched 3.5 times longer to obtain a longitudinally stretched film having a thickness of 180 μm. The longitudinally stretched film was fed to a tenter-type stretching machine and transversely stretched 5 times wider at a preheating temperature of 90°C and a stretching temperature of 120°C. The film was subjected to heat treatment at 245°C and subjected to 3% relaxation treatment in the transverse direction at 200°C.

The film from the tenter was corona-treated on the layer B side and then wound at a film speed of 90 m/min to obtain a polyester film having a thickness of 38 μm.

Examples 2 to 22, 25 to 27, and Comparative Examples 1 to 8

A polyester film was obtained in the same manner as in Example 1, except for changing the resin type and the type and content of the particles in the polyester film layer A, the resin type and the type and content of the particles in the polyester film layer B, and the thickness of each layer as shown in Tables 3 and 4.

Example 23

In Example 12, as a polyester resin constituting the polyester film layer B, the mixture of the silica 1.5% master (M-1) and the titanium oxide 2.5% master (M-2) at (M-1)/(M-2) = 1/49 (mass ratio) was used, and the same operation as in Example 12 was carried out to obtain a polyester film.

Example 24

In Example 14, as a polyester resin constituting the polyester film layer B, the mixture of the silica 1.5% master (M-1) and the titanium oxide 2.5% master (M-2) at (M-1)/(M-2) = 1/49 (mass ratio) was used, and the same operation as in Example 14 was carried out to obtain a polyester film.

Examples 28 to 31

The content of the particles and the layer thickness in the polyester film layer A were changed as shown in Table 4 to prepare a single layer film having only the polyester film layer A.

Example 32

A polyester film having a thickness of 38 $\mu$m was obtained in the same manner as in Example 11, except that the melt of the resin composition A and the melt of the resin composition B were extruded at the thickness ratio of layer A/layer B/layer A of 7/24/7. No corona treatment was carried out.

The structure and evaluation result of the polyester films obtained in the examples and comparative examples are shown in Tables 3 and 4.

[Table 3]

| | | Structure of polyester film | | | | | | | | | | Property of polyester film | | | | | | | | | | | | | | |
|---|---|---|---|---|---|---|---|---|---|---|---|---|---|---|---|---|---|---|---|---|---|---|---|---|---|---|---|
| | | Polyester film layer A | | | Polyester film layer B | | | Layer structure | Layer thickness | D/T | Optical property | | | Surface roughness (surface A) | | | Releasability | Pressurization | Void | Blocking resistance | Air escape | Mold gloss retention (%) | Releasability in molding | |
| | | Resin type | Particle | | Resin type | Particle | | | | | Gloss | Total light transmittance | Haze | Ra | Rz | RSm | | | | | | | (1) | (2) |
| | | | Type | Content | | Type | Content | | | | | | | | | | | | | | | | | |
| | | | | mass% | | | mass% | | μm | μm/μm | % | % | % | μm | μm | μm | | | | | | | | |
| Example | 1 | J-1 | P-1 | 5.0 | J-3 | S-1 | 0.05 | A/B | 10/28 | 0.50 | 24 | 84 | 72 | 0.50 | 4.6 | 94 | G | G | G | G | G | 84 | G | - |
| | 2 | J-1 | P-1 | 0.09 | J-3 | S-1 | 0.05 | A/B | 10/28 | 0.50 | 41 | 85 | 35 | 0.26 | 2.3 | 241 | F | G | G | F | G | 73 | G | - |
| | 3 | J-1 | P-1 | 1.5 | J-3 | S-1 | 0.05 | A/B | 10/28 | 0.50 | 47 | 87 | 28 | 0.34 | 4.7 | 160 | F | G | G | G | G | 85 | G | - |
| | 4 | J-1 | P-1 | 21.0 | J-3 | S-1 | 0.05 | A/B | 10/28 | 0.50 | 19 | 83 | 78 | 0.99 | 6.9 | 59 | G | F | F | G | G | 55 | G | - |
| | 5 | J-1 | P-2 | 13.0 | J-3 | S-1 | 0.05 | A/B | 2/36 | 0.23 | 52 | 84 | 72 | 0.21 | 1.8 | 230 | F | G | G | F | G | 72 | G | - |
| | 6 | J-1 | P-4 | 7.0 | J-3 | S-1 | 0.05 | A/B | 10/28 | 0.30 | 32 | 84 | 83 | 0.45 | 2.4 | 78 | G | G | G | G | G | 81 | G | - |
| | 7 | J-1 | P-4 | 2.5 | J-3 | S-1 | 0.05 | A/B | 10/28 | 0.30 | 46 | 86 | 48 | 0.25 | 2.2 | 85 | F | G | G | G | G | 83 | G | - |
| | 8 | J-1 | P-5 | 5.0 | J-3 | S-1 | 0.05 | A/B | 10/28 | 0.50 | 26 | 83 | 74 | 0.51 | 4.5 | 110 | F | G | G | G | G | 80 | G | - |
| | 9 | J-1 | P-7 | 1.3 | J-3 | S-1 | 0.05 | A/B | 14/24 | 1.43 | 59 | 81 | 68 | 0.95 | 12.1 | 55 | G | F | F | G | G | 55 | G | - |
| | 10 | J-1 | P-8 | 5.0 | J-3 | S-1 | 0.05 | A/B | 10/28 | 0.50 | 25 | 82 | 73 | 0.49 | 4.3 | 120 | F | G | G | G | G | 83 | G | - |
| | 11 | J-8 | P-1 | 5.5 | J-8 | S-1 | 0.03 | A/B | 16.7/21.3 | 0.30 | 22 | 83 | 74 | 0.53 | 4.5 | 92 | G | G | G | G | G | 91 | G | - |
| | 12 | J-8 | P-1 | 5.5 | J-8 | S-1 | 0.03 | A/B | 11/27 | 0.45 | 25 | 83 | 73 | 0.55 | 4.5 | 100 | G | G | G | G | G | 97 | G | - |
| | 13 | J-8 | P-1 | 5.5 | J-8 | S-1 | 0.03 | A/B | 10/28 | 0.50 | 23 | 84 | 74 | 0.56 | 4.7 | 101 | G | G | G | G | G | 94 | G | - |
| | 14 | J-8 | P-1 | 5.5 | J-8 | S-1 | 0.03 | A/B | 7/31 | 0.71 | 26 | 83 | 73 | 0.55 | 4.5 | 100 | G | G | G | G | G | 96 | G | - |
| | 15 | J-8 | P-1 | 5.5 | J-8 | S-1 | 0.03 | A/B | 7/43 | 0.71 | 24 | 83 | 73 | 0.55 | 4.5 | 100 | G | G | G | G | G | 95 | G | - |
| | 16 | J-8 | P-1 | 4.0 | J-8 | S-1 | 0.03 | A/B | 11/27 | 0.45 | 30 | 86 | 65 | 0.41 | 4.6 | 120 | G | G | G | G | G | 93 | G | - |
| | 17 | J-8 | P-1 | 7.0 | J-8 | S-1 | 0.03 | A/B | 11/27 | 0.45 | 20 | 82 | 80 | 0.65 | 4.8 | 88 | G | G | G | G | G | 90 | G | - |
| | 18 | J-8 | P-4 | 4.0 | J-8 | S-1 | 0.03 | A/B | 11/27 | 0.27 | 39 | 85 | 71 | 0.39 | 2.3 | 81 | G | G | G | G | G | 92 | G | - |
| | 19 | J-8 | P-6 | 5.5 | J-8 | S-1 | 0.03 | A/B | 7.7/30.3 | 1.3 | 49 | 83 | 59 | 0.72 | 8.8 | 150 | G | G | G | G | G | 95 | G | - |
| | 20 | J-8 | P-6 | 5.5 | J-8 | S-1 | 0.03 | A/B | 6.7/31.3 | 1.5 | 49 | 82 | 57 | 0.72 | 9.2 | 150 | G | G | G | G | G | 91 | G | - |
| | 21 | J-8 | P-9 | 4.0 | J-8 | S-1 | 0.03 | A/B | 11/27 | 0.91 | 37 | 86 | 70 | 0.38 | 2.5 | 83 | G | G | G | G | G | 87 | G | - |
| | 22 | J-8 | P-1 | 5.5 | J-2 | S-1 | 0.03 | A/B | 11/27 | 0.45 | 25 | 83 | 73 | 0.55 | 4.5 | 100 | G | G | G | G | G | 90 | G | - |

[Table 4]

| | | Structure of polyester film | | | | | | | | | | Property of polyester film | | | | | | | | | | | | |
| | | Polyester film layer A | | | Polyester film layer B | | | Layer structure | Layer thickness | D/T | Optical property | | | Surface roughness (surface A) | | | Releasability | Pressurization | Void | Blocking resistance | Air escape | Mold gloss retention (%) | Releasability in molding | |
| | | Resin type | Particle | | Resin type | Particle | | | | | Gloss | Total light transmittance | Haze | Ra | Rz | RSm | | | | | | | (1) | (2) |
| | | | Type | Content | | Type | Content | | | | | | | | | | | | | | | | | |
| | | | | Mass% | | | Mass% | | μm | μm/μm | % | % | % | μm | μm | μm | | | | | | | | |
| Example | 23 | J-8 | P-1 | 5.5 | J-8 | S-1 S-2 | 0.03 2.5 | A/B | 11/27 | 0.45 | 29 | 51 | 99 | 0.49 | 4.3 | 101 | G | G | G | G | G | 94 | G | - |
| | 24 | J-8 | P-1 | 5.5 | J-8 | S-1 S-2 | 0.03 2.5 | A/B | 7/31 | 0.71 | 26 | 53 | 99 | 0.54 | 4.6 | 90 | G | G | G | G | G | 91 | G | - |
| | 25 | J-2 | P-1 | 5.5 | J-8 | S-1 | 0.03 | A/B | 11/27 | 0.45 | 25 | 83 | 73 | 0.55 | 4.5 | 100 | G | G | G | G | G | 87 | G | - |
| | 26 | J-3 | P-1 | 5.5 | J-8 | S-1 | 0.03 | A/B | 11/27 | 0.45 | 25 | 83 | 73 | 0.55 | 4.5 | 100 | G | G | G | G | G | 83 | G | - |
| | 27 | J-7 | P-1 | 5.5 | J-8 | S-1 | 0.03 | A/B | 11/27 | 0.45 | 25 | 83 | 73 | 0.55 | 4.5 | 100 | G | G | G | G | G | 82 | G | - |
| | 28 | J-8 | P-1 | 5.5 | - | - | - | A | 12 | 0.42 | 25 | 83 | 73 | 0.52 | 4.5 | 90 | G | G | G | G | G | 91 | G | G |
| | 29 | J-8 | P-1 | 8.0 | - | - | - | A | 12 | 0.42 | 20 | 80 | 80 | 0.73 | 5.3 | 64 | G | G | G | G | G | 93 | G | G |
| | 30 | J-8 | P-1 | 5.5 | - | - | - | A | 38 | 0.13 | 25 | 83 | 73 | 0.52 | 4.5 | 90 | G | G | G | G | G | 90 | G | G |
| | 31 | J-8 | P-1 | 7.5 | - | - | - | A | 38 | 0.13 | 20 | 80 | 80 | 0.71 | 5.1 | 69 | G | G | G | G | G | 90 | G | G |
| | 32 | J-8 | P-1 | 5.5 | J-8 | S-1 | 0.03 | A/B/A | 7/24/7 | 0.71 | 25 | 83 | 73 | 0.52 | 4.5 | 90 | G | G | G | G | G | 89 | G | G |
| Comparative Example | 1 | J-1 | P-3 | 1.5 | J-3 | S-1 | 0.05 | A/B | 10/28 | 0.10 | 96 | 87 | 23 | 0.12 | 0.5 | 56 | P | G | G | G | P | 48 | P | - |
| | 2 | J-1 | P-6 | 1.0 | J-3 | S-1 | 0.05 | A/B | 10/28 | 1.00 | 65 | 87 | 20 | 0.42 | 8.1 | 350 | F | G | F | P | G | 53 | P | - |
| | 3 | J-1 | P-6 | 9.5 | J-3 | S-1 | 0.05 | A/B | 10/28 | 1.00 | 42 | 83 | 84 | 1.32 | 9.2 | 120 | G | G | F | P | G | 57 | G | - |
| | 4 | J-1 | P-4 | 18.5 | J-3 | S-1 | 0.05 | A/B | 10/28 | 0.30 | 27 | 81 | 87 | 1.11 | 2.8 | 62 | G | G | G | P | G | 60 | G | - |
| | 5 | J-1 | P-10 | 5.0 | J-3 | S-1 | 0.05 | A/B | 10/28 | 0.40 | 57 | 82 | 77 | 0.43 | 2.5 | 70 | - | P | - | - | - | - | - | - |
| | 6 | J-1 | P-11 | 7.0 | J-3 | S-1 | 0.05 | A/B | 10/28 | 0.53 | 18 | 82 | 82 | 0.57 | 4.9 | 80 | - | P | - | - | - | - | - | - |
| | 7 | J-5 | P-1 | 5.5 | J-8 | S-1 | 0.03 | A/B | 11/27 | 0.45 | 25 | 83 | 73 | 0.36 | 3.1 | 260 | - | P | - | - | - | - | - | - |
| | 8 | J-4 | P-1 | 5.5 | J-8 | S-1 | 0.03 | A/B | 11/27 | 0.45 | 25 | 83 | 73 | 0.55 | 4.5 | 100 | F | G | P | G | G | 59 | P | - |

Since the polyester film layer A in the polyester film in Examples contains a polyester resin having inherent viscosity within the range defined in the present invention and organic particles and the surface roughness was within the range defined in the present invention, the polyester film layer A was excellent in releasability from an adherend and the polyester film was improved with respect to air escape when wound in a roll form and blocking resistance when unwound.

On the other hand, the polyester film of Comparative Example 1 was inferior in releasability because the surface roughness (Ra) of the polyester film layer A was below the range defined in the present invention.

The polyester film in Comparative Example 2 was inferior in releasability and blocking resistance, since the spacing (RSm) of projections on the surface exceeded the range defined in the present invention.

The polyester films in Comparative Examples 3 and 4 were inferior in blocking resistance, since the surface roughness (Ra) exceeded the range defined in the present invention.

In Comparative Examples 5 and 6, the pressurization of the resin composition A for forming the polyester film layer A containing inorganic particles was too early, stopping the preparation of the film.

In Comparative Example 7, the inherent viscosity of the polyester resin constituting the polyester film layer A was higher than the range defined in the present invention and the initial pressure of the filter at the extrusion was high, stopping the preparation of the film.

In the polyester film in Comparative Example 8, since the inherent viscosity of the polyester resin constituting the polyester film layer A was lower than the range defined in the present invention, the organic particles contained in the polyester film layer A were peeled off from the polyester resin when the film was stretched, bubbles (voids) were formed in the polyester film layer A and the organic particles fell off from the polyester film layer A, resulting in mold contamination.

**Claims**

1. A polyester film comprising:

   a polyester film layer A constituting at least one surface of the polyester film,
   wherein a polyester resin constituting the polyester film layer A has an inherent viscosity of 0.63 to 0.86 dl/g;
   the polyester film layer A contains organic particles; and
   the surface of the polyester film layer A has an arithmetic average roughness (Ra) of a roughness curve of 0.2 to 1.0 $\mu$m and an average length (RSm) of roughness curve elements of 10 to 250 $\mu$m.

2. The polyester film according to claim 1, wherein the organic particles have an average particle diameter of 0.5 to 15 $\mu$m.

3. The polyester film according to claim 1 or 2, wherein a ratio (D/T) of the average particle diameter (D) of the organic particles and a thickness (T) of the polyester film layer A is 0.3 to 1.5.

4. The polyester film according to any one of claims 1 to 3, wherein a content of the organic particles in the polyester film layer A is 0.1 to 20 mass%.

5. The polyester film according to any one of claims 1 to 4, wherein the polyester film contains a layer other than the polyester film layer A and the layer other than the polyester film layer A contains a pigment.

6. The polyester film according to any one of claims 1 to 5, wherein a gloss retention rate (G/G0 $\times$ 100) obtained from a gloss (G) of a mold surface after repeating an operation of loading the polyester film in contact with the heated mold cavity; evacuating an inside of the cavity; and releasing a vacuum after a certain period of time and an initial gloss (G0) is 70% or more.

7. The polyester film according to any one of claims 1 to 6, wherein one surface is constituted of the polyester film layer A and an adhesive layer is laminated onto another surface.

8. A protective film for an adhesive sheet, using the polyester film according to any one of claims 1 to 7.

9. A release film for mold, using the polyester film according to any one of claims 1 to 7.

### INTERNATIONAL SEARCH REPORT

| | International application No. |
|---|---|
| | PCT/JP2017/035245 |

**A. CLASSIFICATION OF SUBJECT MATTER**

Int.Cl. C08J5/18(2006.01)i, B32B27/00(2006.01)i, B32B27/20(2006.01)i, B32B27/36(2006.01)i, C08L67/02(2006.01)i, C08L101/00(2006.01)i, C09J7/02(2006.01)i

According to International Patent Classification (IPC) or to both national classification and IPC

**B. FIELDS SEARCHED**

Minimum documentation searched (classification system followed by classification symbols)

Int.Cl. C08J5/00-5/02, C08J5/12-5/22, B32B1/00-43/00, C08K3/00-13/08, C08L1/00-101/14, C09J7/00-7/04

Documentation searched other than minimum documentation to the extent that such documents are included in the fields searched

| | |
|---|---|
| Published examined utility model applications of Japan | 1922–1996 |
| Published unexamined utility model applications of Japan | 1971–2017 |
| Registered utility model specifications of Japan | 1996–2017 |
| Published registered utility model applications of Japan | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2007-039515 A (MITSUBISHI POLYESTER FILM CORPORATION) 15 February 2007, claims, paragraphs [0001], [0002], [0011], [0014], [0018], [0020]-[0046] (Family: none) | 1-4, 6 |
| Y | | 5, 7-9 |
| X | JP 2007-181950 A (MITSUBISHI POLYESTER FILM CORPORATION) 19 July 2007, claims, paragraphs [0001], [0002], [0009], [0010], [0015]-[0017], [0027]-[0059] (Family: none) | 1-4, 6, 7 |
| A | | 5, 8, 9 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 December 2017 | 26 December 2017 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2017/035245 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | JP 2010-201857 A (MITSUBISHI PLASTICS IND.) 16 September 2010, claims, paragraphs [0013], [0024]-[0054] (Family: none) | 1-4, 6<br>5, 7-9 |
| Y<br>A | JP 2014-237248 A (MITSUBISHI PLASTICS IND.) 18 December 2014, claims, paragraphs [0029]-[0031], [0040] (Family: none) | 5<br>1-4, 6-9 |
| Y<br>A | JP 2016-168691 A (UNITIKA LTD.) 23 September 2016, paragraphs [0006], [0012] (Family: none) | 7, 8<br>1-6, 9 |
| Y<br>A | JP 2016-127091 A (SEKISUI CHEMICAL CO., LTD.) 11 July 2016, claims (Family: none) | 9<br>1-8 |
| P, X | JP 2016-175229 A (TORAY INDUSTRIES) 06 October 2016, claims, paragraphs [0002], [0015]-[0019], [0022], [0036]-[0086] (Family: none) | 1-9 |
| A | JP 2016-150483 A (SUMITOMO BAKELITE CO., LTD.) 22 August 2016, claims, paragraphs [0019]-[0022], [0025]-[0031] (Family: none) | 1-9 |
| A | JP 2016-089150 A (TORAY INDUSTRIES) 23 May 2016, claims (Family: none) | 1-9 |
| A | JP 2016-002730 A (SUMITOMO BAKELITE CO., LTD.) 12 January 2016, claims, paragraphs [0047]-[0061] (Family: none) | 1-9 |
| A | JP 2013-129077 A (TEIJIN DUPONT FILMS JAPAN LTD.) 04 July 2013, claims, paragraphs [0018], [0051] (Family: none) | 1-9 |
| A | WO 2014/126150 A1 (NITTO DENKO CORPORATION) 21 August 2014, claims, paragraphs [0034], [0123]<br>& JP 2014-179593 A & KR 10-2015-0117653 A & TW 201442164 A | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001322218 A
- JP 2006312263 A
- JP 2015040220 A